# EUROPÄISCHE PATENTSCHRIFT

(11) **EP 1 775 563 B1**
(45) Veröffentlichungstag und Bekanntmachung des Hinweises auf die Patenterteilung: **17.07.2013**
(21) Anmeldenummer: 06090184.0
(22) Anmeldetag: 06.10.2006
(51) Int. Cl.: G01S 5/18, G01H 3/12, G01S 3/808, G01H 11/00, G10K 11/20

(54) **Vorrichtung und Verfahren zur Schallquellenlokalisation in einem Schallmessprüfstand**
Method and apparatus used on a testrig for locating the source of a sound
Procédé et dispositif de localisation de source sonore pour un banc d'essai

(30) Priorität: 12.10.2005 DE 102005049323
(43) Veröffentlichungstag der Anmeldung: 18.04.2007
(73) Patentinhaber: Deutsches Zentrum für Luft- und Raumfahrt e.V., 51147 Köln (DE)
(72) Erfinder: Böhning, Peer, 14059 Berlin (DE); Ulf, Michel Dr., 14193 Berlin (DE)
(74) Vertreter: Patentanwälte Bressel und Partner

(56) Entgegenhaltungen:
- DE-C1- 3 715 016
- US-A1- 2002 059 832

## Beschreibung

Die Erfindung betrifft eine Vorrichtung zur Schallquellenlokalisation in einem Schallmessprüfstand nach dem Oberbegriff des Patentanspruchs 1 und ein Verfahren zur Schallquellenlokalisation in einem Schallmessprüfstand nach dem Oberbegriff des Patentanspruchs 7.

Lärmemissionen stellen allgemein eine Umweltbelastung dar. In einer mobilen Gesellschaft, in der ein Flugaufkommen stetig steigt, stellen die Belastungen durch Fluglärm ein besonders großes Problem dar, da hiervon eine große Anzahl von Menschen im Umfeld von Flughäfen betroffen ist. Seit Jahren sind die Emissionsgrenzwerte für Flugzeuge verschärft worden und haben zu einer deutlichen Reduktion der Lärmbelastung im Umfeld von Flughäfen gesorgt. Dennoch stellen Flugzeugtriebwerke beim Starten und Landen von Flugzeugen weiterhin die lauteste Schallquelle eines Flugzeugs dar. Um zu einer weiteren Reduktion der Schallemission eines Triebwerks zu gelangen, ist es notwendig, die Entstehungsorte des Schalls an dem Triebwerk möglichst genau zu lokalisieren.

Die Orte, an denen Schallsignale entstehen und/oder aus einem Objekt austreten, werden als Schallquellen bezeichnet. Neben einer Simulation der Schallentstehung ist es ebenso notwendig, dass Triebwerke vermessen werden, um einen Einfluss von Maßnahmen zur Schallemissionsunterdrückung zu kontrollieren. Hierzu wird ein Triebwerk als Prüfmuster in einem Schallmessprüfstand angeordnet. An dem Schallmessprüfstand sind mehrere Mikrofone voneinander beabstandet angeordnet, die Schallmesssignale eines Schallfelds erfassen, das von den unterschiedlichen Schallquellen des Prüfmusters erzeugt wird. Die Schallmesssignale werden von einer Auswerteeinrichtung ausgewertet, die anhand der bekannten Positionen, an denen die Mikrofone angeordnet sind, die einzelnen Schallquellen lokalisieren kann. So kann der Schalleinfluss beispielsweise des Einlasses, der Haupt- und Nebenstromdüse, sowie des Strahls bei einem Strahltriebwerk getrennt und analysiert werden.

Es sind Freiluft-Schallmessprüfstande bekannt, die jedoch wegen der starken Schallemission nur in abgelegenen Gebieten errichtet und betrieben werden. Hierdurch entstehen hohe Transportkosten für die Prüfmuster und die Messtechnik. Messungen sind zudem stark vom Wetter abhängig. So können Messpläne bei starken Regen oder Wind häufig nicht eingehalten werden. Es ist ferner bekannt Messungen in geschlossenen Schallmessprüfständen durchzuführen, die mit reflexionsarmen Begrenzungsflächen versehen sind. Die Herstellung dieser reflexionsarmen Räume ist sehr teuer. Daher werden zunehmend auch Messungen in Schallmessprüfständen ausgeführt, die hallenartig ausgebildet sind und eine ausreichende Lärmisolation aufweisen und sich in der Regel auf dem Werksgelände von Triebwerksproduktions- oder Entwicklungsstandorten befinden. Diese Schallmessprüfstände weisen Begrenzungsflächen auf, die zumindest teilweise schall hart sind, so dass gerichtete Reflexionen des Schalls an ihnen auftreten. Reflektierte Schallsignale aufgrund dieser Reflexionen können hierbei als Schallsignale kohärenter Spiegelschallquellen betrachtet werden.

Bekannte Auswerteverfahren berücksichtigen die auftretenden Reflexionen an den schallharten Begrenzungsflächen in der Regel gar nicht. Für die Freiluft-Prüfstände ist jedoch bekannt, dass bei einer Anordnung der Mikrofone auf dem Boden, die Einflüsse der einzigen Spiegelschallquelle, die mit dem Boden verknüpft ist, einfach berücksichtigt werden kann. Bei einer Anordnung der Mikrofone auf dem Boden werden jeweils die Entfernungen von der Schallquelle zum Mikrofon und von der Spiegelschallquelle zum Mikrofon gleich groß. Aufgrund einer Interferenz zwischen dem Schaldruckfeld der Quelle und dem mit der Spiegelschallquelle verknüpften Schalldruckfeld, tritt eine Verdoppelung des Schalldrucks am Mikrofon (am Boden), jedoch keine frequenzabhängige Phasenverschiebung auf. Somit können die Reflexionen einfach rechnerisch kompensiert werden, indem der Schalldruck durch eine Zahl zwei dividiert wird. Im Stand der Technik ist ein Auswerteverfahren für Windkanäle bekannt, bei dem in sehr aufwändigen Berechnungen die Spiegelschallquellen mit einbezogen werden.

Der Erfindung liegt das technische Problem zugrunde, eine Vorrichtung und ein Verfahren zum einfacheren und genaueren Lokalisieren von Schallquellen eines Prüfmusters, insbesondere eines Flugzeugtriebwerks in einem zumindest teilweise geschlossenen Schallmessprüfstand zu schaffen.

Die technische Aufgabe wird erfindungsgemäß durch eine Vorrichtung mit den Merkmalen des Patentanspruchs 1 und ein Verfahren mit den Merkmalen des Patentanspruchs 7 gelöst. Vorteilhafte Ausgestaltungen der Erfindung ergeben sich aus den Unteransprüchen.

Hierfür ist vorgesehen, dass ein Prüfmuster, beispielsweise ein Strahltreibwerk, in einem Messvolumen eines geschlossenen Schallmessprüfstands angeordnet wird. Ein Strahltriebwerk kann idealisiert als eine lineare Quelle betrachtet werden. Das Messvolumen ist entweder durch Wände des Schallmessprüfstands oder in den Schallmessprüfstand eingebrachte Gegenstände eingegrenzt. Diese das Messvolumen eingrenzenden Flächen der Gegenstände und/oder Wände werden als Begrenzungsflächen bezeichnet. In dem Schallmessprüfstand sind voneinander beabstandet Mikrofone zum Erfassen von Schallmesssignalen angeordnet. Die Schallmesssignale der Mikrofone werden mittels einer Auswerteeinheit zum Orten der Schallquellen des Prüfmusters ausgewertet. Erfindungsgemäß ist vorgesehen, dass die Mikrofone als lineares Array entlang einer Kante angeordnet sind, entlang derer zwei der Begrenzungsflächen, die eben ausgebildet sind, aneinander anstoßen. Hierdurch können einfach und genau die Reflexionen des Schallfelds an zwei Begrenzungsflächen berücksichtigt werden. Sind beispielsweise ein Boden des Schallmessprüfstands und eine Seitenwand hinreichend eben, so können die Mikrofone als lineares Array entlang der Kante angeordnet werden, an der die Seitenwand auf den Boden trifft. Die Ausrichtung des Prüfmusters erfolgt bei der Anbringung so, dass das Prüfmuster, wenn es ein Flugzeugtriebwerk ist, parallel zu der Kante ausgerichtet ist, entlang derer die Mikrofone angeordnet sind. Bilden die beiden Begrenzungsflächen des Messvolumens einen rechten Winkel zueinander, so kann der Schalldruck, der von den Mikrofonen gemessen wird, bezüglich der Störungen aufgrund von Reflexionen an den Begrenzungsflächen dadurch korrigiert werden, indem eine Division des gemessenen Schalldrucks durch vier vorgenommen wird. Die Reflexionen an beiden Begrenzungsflächen bewirken nämlich auf Grund der Interferenz der beiden kohärenten, mit den Spiegelschallquellen verknüpften Schalldruckfelder und des Schalldruckfelds des Prüfmusters eine Vervierfachung des Schalldrucks. Es treten keine frequenzabhängigen Phasenverschiebungen auf. Die Schallortung kann auch die Bestimmung der Spektren der emittierten Schallsignale umfassen.

Grundsätzlich sind Schallsignalanteile des Schallfelds abgeschwächt, die an Begrenzungsflächen reflektiert werden, die den zwei der Begrenzungsflächen gegenüberliegen, die die Kante bilden, entlang derer das lineare Mikrofonarray angeordnet ist. Dies liegt daran, dass ein Weg den diese Schallsignalanteile zurücklegen größer als ein direkter Schallweg von dem Prüfmuster zu den Mikrofonen ist. Eine noch größere Reduktion dieser reflektierten Signalanteile erhält man bei einer besonders bevorzugten Ausgestaltung der Erfindung, bei der den mindestens zwei der Begrenzungsflächen gegenüberliegende Begrenzungsflächen schallabsorbierend ausgebildet sind. Sind die gegenüberliegenden Begrenzungsflächen schallabsorbierend ausgebildet, so kann eine rechnerische Berücksichtigung von Reflexionen an diesen gegenüberliegenden Begrenzungsflächen in der Regel ganz unterbleiben.

Eine vorteilhafte Weiterbildung der Erfindung sieht vor, dass die eine oder die beiden der mindestens zwei der Begrenzungsflächen integral mit dem Schallmessprüfstand ausgebildet sind. In diesem Fall kann eine mit einer Seitenwand, dem Boden oder einer Decke des Schallmessprüfstands gebildete Kante zum Anordnen des linearen Arrays genutzt werden.

Sind die Seitenwände, der Boden und/oder die Decke nicht eben genug, weil sie beispielsweise Türen, Lampenvertiefungen usw. umfassen, so ist es vorteilhaft, eine oder zwei Begrenzungsflächen in den Schallmessprüfstand einzubringen, die die Kante bilden, entlang derer die Mikrofone als das lineare Array angeordnet werden. Die Begrenzungsflächen die eingebracht werden, werden so gewählt, dass mit ihnen auch die Reflexionen von im Wesentlichen parallel ausgerichteten hinter ihnen angeordneten weiteren Begrenzungsflächen des Messvolumens berücksichtigt werden. Eine Begrenzungsfläche liegt in diesem Sinne hinter einer der eingebrachten Begrenzungsflächen, wenn eine virtuell unendliche ausgedehnte Fläche der einen der eingebrachten Begrenzungsflächen die Begrenzungsfläche gegenüber Schallsignalen des Prüfmusters abschirmen würde. Wird beispielsweise ein lang gestrecktes Winkelprofil auf dem Boden parallel zu einer Seitenwand in den Schallmessprüfstand eingebracht, so werden durch die Berücksichtigung der Reflexionen an dem Winkelprofil in der oben angegebenen Weise sowohl die Reflexionen am Boden als auch an der Seitenwand mitberücksichtigt.

Um eine vollständigere Messinformation zu erhalten, sieht eine Weiterbildung der Erfindung vor, dass weitere Mikrofone mindestens in einem weiteren linearen Mikrofonarray zum Erfassen weiterer Schallmesssignale entlang einer weiteren zu der Kante kollinearen Kante angeordnet sind, die von den Begrenzungsflächen gebildet ist.

Eine noch vollständigere Schallsignalinformation erhält man bei einer Weitebildung, bei der zusätzliche Mikrofone in einem zusätzlichen linearen Array zum Erfassen zusätzlicher Schallmesssignale angeordnet sind, wobei das zusätzliche lineare Array nicht kollinear zu dem linearen Array ausgerichtet ist. Bei einer Auswertung der Messwerte der zusätzlichen Mikrofone sind jedoch Reflexionen an den Begrenzungsflächen des Messvolumens zu beachten.

Um eine vollständige Eliminierung der Schallsignalanteile, die auf Reflexionen an den den mindestens zwei der Begrenzungsflächen gegenüberliegenden Begrenzungsflächen zurückführbar sind, zu erreichen, ist bei einer Ausführungsform vorgesehen, dass die Schallmesssignale jeweils intervallweise erfassbar sind, wobei eine zeitliche Intervalllänge kleiner als eine Laufzeit eines an den den mindestens zwei der Begrenzungsflächen gegenüberliegenden Begrenzungsflächen reflektierten Schallsignals von einer der Schallquellen zu einem der Mikrofone des linearen Arrays ist. Hierdurch kann eine Abtrennung der reflektierten Signalanteile durch eine zeitliche Trennung erreicht werden. Diese Trennung ist auch möglich, wenn die den mindestens zwei der Begrenzungsflächen gegenüberliegenden Begrenzungsflächen nicht schallabsorbierend ausgebildet sind.

Die Merkmale der Unteransprüche des erfindungsgemäßen Verfahrens weisen dieselben Vorteile wie die entsprechenden Merkmale der erfindungsgemäßen Vorrichtung auf.

Nachfolgend wird die Erfindung anhand eines bevorzugten Ausführungsbeispiels unter Bezugnahme auf Figuren näher erläutert. Diese zeigen:
- Fig. 1: eine schematische Darstellung eines Querschnitts durch einen Schallmessprüfstand zur Erläuterung der Berücksichtigung von reflektierten Schallsignalen mit Hilfe von kohärenten Spiegelschallquellen;
- Fig. 2: eine schematische Darstellung eines Schallmessprüfstands, bei dem Mikrofone zum Erfassen von Schallmesssignalen entlang einer Kante des Schallmessprüfstands angeordnet sind;
- Fig.3: eine schematische Darstellung eines weiteren Querschnitts durch einen weiteren Schallmessprüfstand zur Erläuterung des Einflusses von reflektierten Schallsignalen auf Mikrofone, die entlang einer Kante des Schallmessprüfstands angeordnet sind; und
- Fig. 4: eine schematische Darstellung eines anderen Schallmessprüfstands, in den Begrenzungsflächen eines Messvolumens eingebracht sind, die eine Kante bilden, entlang derer Mikrofone zum Erfassen von Schallmesssignalen angeordnet sind.

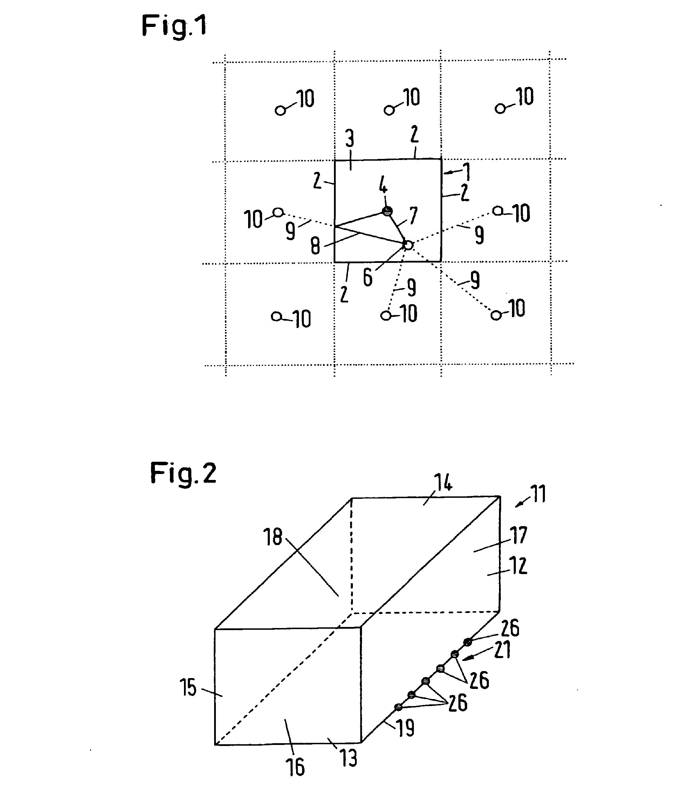

In Fig. 1. ist schematisch ein Querschnitt durch einen Schallmessprüfstand 1 dargestellt. Begrenzungsflächen 2, die als Seitenwände des Schallmessprüfstands 1 ausgebildet sind, grenzen ein Messvolumen 3 ein. In einer Mitte des Messvolumens 3 ist ein senkrecht zur Zeichenebene ausgedehntes Prüfmuster 4 angeordnet, welches beispielsweise ein Strahltriebwerk zum Antreiben eines Flugzeugs ist. Von dem Prüfmuster wird ein Schallfeld erzeugt. In dem Schallmessprüfstand 1 sind Mikrofone 6 angeordnet. Das Schallfeld umfasst direkte Schallsignale 7, die sich von dem Prüfmuster gradlinig zu den Mikrofonen 6 ausbreiten, und reflektierte Schallsignale 8, die an mindestens einer der Begrenzungsflächen 2 mindestens einmal reflektiert werden, bevor sie die Mikrofone 6 erreichen. Hierbei wird davon ausgegangen, dass die Begrenzungsflächen 2 zumindest teilweise schallhart sind, so dass sie die reflektierten Schallsignale 8 gerichtet reflektieren.

Mit Hilfe der Mikrofone 6 werden Schallmesssignale des Schallfelds erfasst. Die Schallmesssignale sind hierbei die erfassten Messsignale, die sich aus einer Überlagerung der direkten Schallsignale 7 und der reflektierten Schallsignale 8 ergeben. Die reflektierten Schallsignale 8 können bei einer Auswertung der Schallmesssignale als virtuelle direkte Schallsignale 9 virtueller, kohärenter Spiegelschallquellen 10 betrachtet werden.

In Fig. 2 ist eine Ausführungsform eines Schallmessprüfstands 11 dargestellt. Der Schallmessprüfstand 11 umfasst eine Seitenwand 12, einen Boden 13, eine Decke 14, eine der Seitenwand 12 gegenüberliegende weitere Seitenwand 15, eine Stirnwand 16 und eine der Stirnwand 16 gegenüberliegende Rückwand 17, die jeweils Begrenzungsflächen eines Messvolumens 18 sind. Die Begrenzungsflächen sind jeweils schallhart und eben ausgebildet, wobei die Stirnwand einen Einlass (nicht dargestellt) und die Rückwand einen Auslass (nicht dargestellt) umfassen, durch die ein beim Betrieb eines als Strahltriebwerk ausgebildeten Prüfmusters Fluide strömen können. Dieses bedeutet, durch den Einlass tritt Luft ein, durch den Auslass tritt im Wesentlichen der Abgasstrahl des Prüfmusters aus. Der Schallmessprüfstand ist insgesamt so ausgebildet, dass beim Betreiben des Prüfmusters Schallemissionsgrenzwerte außerhalb des Schallmessprüfstands nicht überschritten werden.

Der Boden 13 und die Seitenwand 12 stoßen entlang einer Kante 19 aneinander. Entlang und in dieser Kante 19 sind Mikrofone 26 als lineares Array 21 angeordnet, um unterschiedliche Schallquellen des Prüfmusters zu orten und die von diesen Schallquellen ausgehenden Schallsignale zu trennen. Das Orten erfolgt mittels einer Auswerteeinheit (nicht dargestellt), die die Schallmesssignale bei Kenntnis der Positionen der Mikrofone 26 verarbeitet.

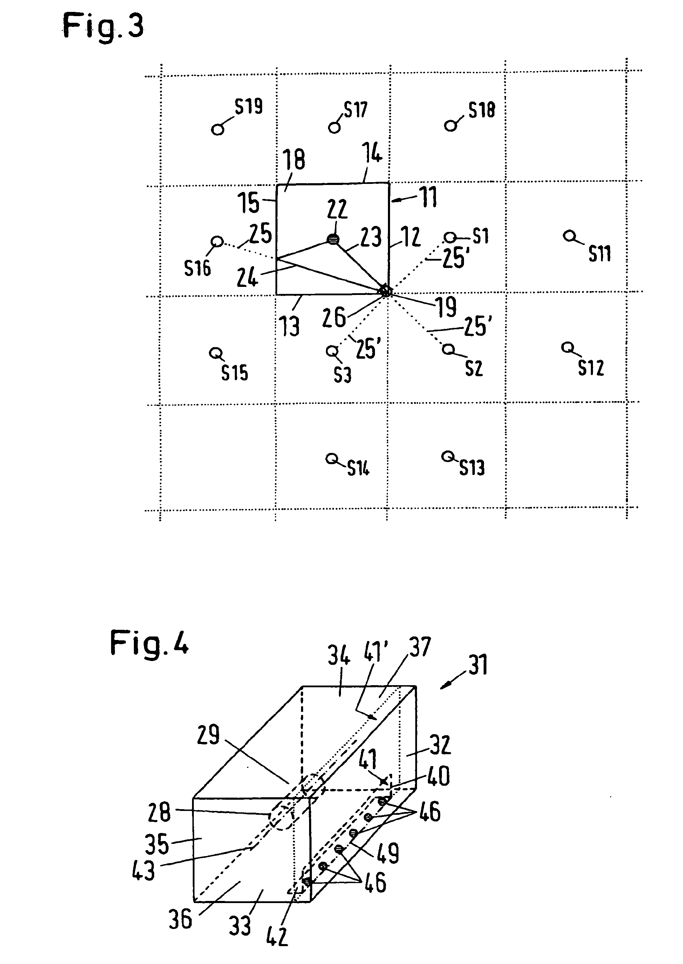

Anhand von Fig. 3 soll erläutert werden, welche Vorteile sich bei einer Auswertung der Schallmesssignale ergeben, die mit der Mikrofonanordnung nach als lineares Array 21 Fig. 2 aufgenommen werden. Gleiche Merkmale sind in den Figuren 2 und 3 mit identischen Bezugzeichen versehen. In Fig. 3 ist ein Schnitt durch den Schallmessprüfstand 11 nach Fig. 2 senkrecht zu der Seitenwand 12, dem Boden 13, der Decke 14 und der der Seitenwand 12 gegenüberliegenden weiteren Seitenwand 15 dargestellt, die Begrenzungsflächen des Messvolumens 18 sind. In einer Mitte des Messvolumens 18 ist punktförmig das Prüfmuster 22 dargestellt. Das Prüfmuster 22 erstreckt sich senkrecht zur Zeichenebene parallel zu der Seitenwand 12, dem Boden 13, der Decke 14 und weiteren Seitenwand 14.

In der Kante 19, die von dem Boden 13 und der daran anstoßenden Seitenwand 12 gebildet ist, sind die Mikrofone 26 angeordnet. Das von den Mikrofonen 26 erfasste Schallfeld umfasst direkte Schallsignale 23, die sich von dem Prüfmuster 22 geradlinig direkt zu den Mikrofonen 26 ausbreiten und reflektierte Schallsignale 24, die an mindestens einer der Begrenzungsflächen des Messvolumens 18 reflektiert sind. Diese reflektierten Schallsignale können, wie oben bereits erläutert ist, als so genannte virtuelle direkte Schallsignale 25 von virtuellen, zu den Schallquellen des Prüfmusters kohärenten Spiegelschalquellen S1-S3, S11-S20 betrachtet und behandelt werden. Betrachtet man das Schallfeld eines Triebwerks als rotationssymmetrisches Schallfeld, deren Schallquellen sich alle jeweils auf einer zentralen Achse des Triebwerks befinden, so ist mit jeder Reflexion an einer der ebenen Begrenzungsflächen eine der Spiegelschallquelle S1-S3, S11-S20 verknüpft. Mit den an der der Seitenwand 12 gegenüberliegenden weiteren Seitenwand 15 reflektieren Schallsignalen 24 ist die virtuelle Spiegelschallquelle S16 assoziiert, die virtuelle direkte Schallsignale 25 aussendet. Mit einer Reflexion an der Seitenwand 12 ist die Spiegelschallquelle S1 und mit einer Reflexion an dem Boden 13 die Spiegelschallquelle S3 und mit einer einfachen Reflexion an der Decke 14 die Spiegelschallquelle S17 assoziiert. Die Spiegelschallquelle S2 ist mit einer Doppelreflexion an der Seitenwand 12 und dem Boden 13 bzw. einer Reflexion an der Kante 19 assoziiert. Analog sind die Schallquellen S15 mit zwei Reflexionen und zwar an dem Boden 13 und der weiteren Seitenwand 15, die Spiegelschallquelle S19 mit Reflexionen an der weiteren Seitenwand 15 und der Decke 14, die Spiegelschallquelle S18 mit doppelt reflektierten Schallsignalen an der Decke 14 und der Seitenwand 12 assoziiert. Entsprechend sind die virtuellen Spiegelschallquellen S11, S12, S14 und S13 jeweils mit doppelt bzw. dreifach reflektierten Schallsignalen assoziiert.

Die mit Laufzeiten der direkten Schallsignale 7 und der mit den Spiegelschallquellen S1, S2 und S3 assoziierten virtuellen direkten Schallsignale 25' zu den Mikrofonen 26 sind gleich und eine Interferenz dieser direkten Schallsignale 23 und virtuellen direkten Schallsignale 25' führt bei einem 90°-Winkel zwischen dem Boden 13 und der Seitenwand 12 zu einer Vervierfachung des Schalldruckpegels in den in der Kante 19 angeordneten Mikrofonen 26. Die Reflexionen an der Seitenwand 12 und dem Boden 13 können somit durch eine Division durch vier berücksichtigt werden. Da die Laufzeiten der reflektierten Schallsignale 23 von dem Prüfmuster 22 zu den Mikrofonen 26 größer sind als die der direkten Schallsignale 23, können die direkten Schallsignale 23 und die reflektierten Schallsignale 24 getrennt werden, wenn die von den Mikrofonen erfassten Schallmesssignale intervallweise ausgewertet werden, wobei die Intervalllänge kürzer als eine Signallaufzeitdifferenz aus den Signallaufzeiten der direkten Schallsignale 23 und der (einfach) reflektierten Schallsignale 24 ist. Hierdurch wird eine zeitliche Trennung der Schalldruckpegelanteile möglich, die auf die direkten Schallsignale 23 und die reflektierten Schallsignale 24 zurückführbar sind. Für andere reflektierte Schallsignale, die mit Hilfe der weiteren virtuellen Spiegelschallquellen S11-S20 repräsentiert werden, gilt dasselbe. Zusätzlich nimmt der Schalldruck, eines reflektierten Schallsignals mit dem Abstand der jeweiligen Spiegelschallquelle S11-S19 von dem entsprechenden der Mikrofone 26 ab. So können Schallsignalanteile, die Spiegelschallquellen zugeordnet sind, die mit mehrfach reflektierten Schallsignalen assoziiert sind, in der Regel vernachlässigt werden.

Figur 4 zeigt eine Ausführungsform eines weiteren Schallmessprüfstands 31, der hallenartig ausgebildet ist. Der Prüfstand umfasst eine Seitenwand 32 einen Boden 33, eine Decke 34, eine der Seitenwand 32 gegenüberliegende weitere Seitenwand 35 sowie eine Stirnwand 36 und eine Rückwand 27. Ein Prüfmuster 28, das als Strahltriebwerk ausgebildet ist, ist entlang einer Achse 43 ausgerichtet, die parallel zu der Seitenwand 32, dem Boden 33, der Decke 34 und weiteren Seitenwand 35 verläuft.

Ein Messvolumen 29 wird zum Teil durch einen Gegenstand 40 eingegrenzt. Der Gegenstand 40 ist als Winkelprofil ausgebildet und umfasst eine erste ebene Fläche 41, die parallel zu der Seitenwand 32 ausgerichtet ist, und eine zweite Fläche 42, die parallel zu dem Boden 33 auf diesem angeordnet ist. In und entlang einer Kante 49, an der die erste Fläche 41 an die zweite Fläche 42 anstößt, sind Mikrofone 46 angeordnet, die mit einer nicht dargestellten Auswerteeinheit verknüpft sind. Eine solche Anordnung wir bevorzugt, wenn beispielsweise die Seitenwand 32 und/oder der Boden 33 des Schallmessprüfstands 31 nicht hinreichend eben sind. Die erste Fläche 41 ist so gewählt, dass an der Seitenwand 32 reflektierte Schallsignale nicht zu den Mikrofonen 46 gelangen können. Dieses ist dann der Fall, wenn eine virtuelle Fläche 41', die sich ergibt, wenn man die erste Fläche 41 virtuell vergrößert, die Seitenwand 32 gegenüber Schallsignalen von dem Prüfmuster 28 abschirmen würde. Es versteht sich, dass die erste Fläche 42 Abmessungen aufweisen muss, die die Abmessungen der Mikrofone 46 übertreffen und mindestens in der Größenordnung der größten untersuchten Wellenlänge der Schallsignale liegen. Der Gegenstand 40 kann in dem dargestellten Beispiel verwendet werden, um Störungen an den gemessenen Schallmesssignalen aufgrund von reflektierten Signalanteilen an der Seitenwand 32 und an dem Boden 33 in der oben angegebenen Weise mittels einer Division durch vier einfach zu berücksichtigen.

Dem Fachmann sind Rechenverfahren bekannt, wie man aus den Schallmesssignalen der Mikrofone 46 Schallquellen des Prüfmusters 28 bestimmen kann.

Eine Weiterbildung kann vorsehen, dass weitere Mikrofone entlang einer weiteren Kante, an der Begrenzungsflächen des Messvolumens aneinander anstoßen, angeordnet sind. Diese weiteren Mikrofone bilden ein weiteres lineares Array, das zu dem in der Kante angeordneten linearen Array der Mikrofone kollinear ist. Beispielsweise könnte eine solche Weiterbildung der Ausführungsform nach Fig. 2 vorsehen, dass die weiteren Mikrofone entlang und in der Kante angeordnet sind, die von der Decke 14 und der Seitenwand 12 gebildet ist.

Eine andere Ausführungsform kann zusätzlich oder alternativ zusätzliche Mikrofone, vorzugsweise in Form eines zusätzlichen linearen Arrays umfassen, das nicht kollinear zu dem in der Kante gebildeten Array der Mikrofone ist. Das zusätzliche Array kann, wenn man diese Ausführungsform als weiter Fortbildung der Ausführungsform nach Fig. 2 betrachtet, beispielsweise auf dem Boden 13 senkrecht zu der Kante 19 ausgebildet sein. Bei der Auswertung der Schallmesssignale der zusätzlichen Mikrofone sind Reflexionen an den Begrenzungsflächen des Messvolumens zu berücksichtigen.

### Bezugszeichenliste

- 1: Schallmessprüfstand
- 2: Begrenzungsflächen
- 3: Messvolumen
- 4: Prüfmuster
- 6: Mikrofone
- 7: direkte Schallsignale
- 8: reflektierte Schallsignale
- 9: virtuelle direkte Schallsignale
- 10: Spiegelschallquellen
- 11: Schallmessprüfstand
- 12: Seitenwand
- 13: Boden
- 14: Decke
- 15: weitere Seitenwand
- 16: Stirnwand
- 17: Rückwand
- 18: Messvolumen
- 19: Kante
- 21: lineares Array
- 22: Prüfmuster
- 23: direkte Schallsignale
- 24: reflektierte Schallsignale
- 25, 25': virtuelle direkte Schallsignale
- 26: Mikrofone
- 28: Prüfmuster
- 29: Messvolumen
- 31: Schallmessprüfstand
- 32: Seitenwand
- 33: Boden
- 34: Decke

- 35: weitere Seitenwand
- 36: Stirnwand
- 37: Rückwand
- 40: Gegenstand
- 41: erste Fläche
- 41': virtuelle erste Fläche
- 42: Zweite Fläche
- 43: Achse
- 46: Mikrofone
- 49: Kante
- S1-S3, S11-S20: Spiegelschalquellen

## Patentansprüche

1. Vorrichtung zur Schallquellenlokalisation eines Schallfelds eines Prüfmusters (22,28) in einem Messvolumen (3, 18, 29) eines geschlossenen Schallmessprüfstands (1, 11, 31), wobei das Messvolumen (3, 18, 29) durch mehrere Begrenzungsflächen eingegrenzt ist, wobei die Vorrichtung umfasst:
mindestens zwei der mehreren Begrenzungsflächen, mehrere voneinander beabstandet angeordnete Mikrofone (6, 26, 46) zum Erfassen von Schallmesssignalen des Schallfelds und eine mit den Mikrofonen (6, 26, 46) gekoppelte Auswerteeinheit zum Orten von Schallquellen des Schallfelds,
**dadurch gekennzeichnet, dass**
die mindestens zwei der mehreren Begrenzungsflächen eben ausgebildet und
schallhart sind und entlang einer Kante (19, 49) aneinander anstoßen und die Mikrofone (6, 26, 46) entlang dieser Kante (19, 49) als lineares Array (21) angeordnet sind.

2. Vorrichtung nach Anspruch 1, **dadurch gekennzeichnet, dass** mindestens eine der mindestens zwei der mehreren Begrenzungsflächen eine Fläche eines in den Schallmessprüfstand eingebrachten Gegenstands ist.

3. Vorrichtung nach Anspruch 1 oder 2, **dadurch gekennzeichnet, dass** mindestens eine der mindestens zwei der mehreren Begrenzungsflächen integral mit dem Schallmessprüfstand (1, 11, 31) ausgebildet ist.

4. Vorrichtung nach einem der vorangehenden Ansprüche, **dadurch gekennzeichnet, dass** den mindestens zwei der mehreren Begrenzungsflächen gegenüberliegende Begrenzungsflächen schallabsorbierend ausgebildet sind.

5. Vorrichtung nach einem der vorangehenden Ansprüche, **dadurch gekennzeichnet, dass** weitere Mikrofone (6, 26, 46) mindestens in einem weiteren linearen Mikrofonarray zum Erfassen weiterer Schallmesssignale entlang einer weiteren zu der Kante (19, 49) kollinearen Kante angeordnet sind, die von den mehreren Begrenzungsflächen gebildet ist.

6. Vorrichtung nach einem der vorangehenden Ansprüche, **dadurch gekennzeichnet, dass** zusätzliche Mikrofone in einem zusätzlichen linearen Array zum Erfassen zusätzlicher Schallmesssignale angeordnet sind, wobei das zusätzliche lineare Array nicht kollinear zu dem linearen Array (21) ist.

7. Vorrichtung nach einem der vorangehenden Ansprüche, **dadurch gekennzeichnet, dass** die mindestens zwei der mehreren Begrenzungsflächen Flächen eines Winkelprofils sind.

8. Vorrichtung nach einem der vorangehenden Ansprüche, **dadurch gekennzeichnet, dass** die Schallmesssignale jeweils intervallweise erfasst werden, wobei eine zeitliche Intervalllänge kleiner als eine Laufzeit eines an den den mindestens zwei der Begrenzungsflächen gegenüberliegenden Begrenzungsflächen reflektierten Schallsignals von einer der Schallquellen zu einem der Mikrofone (6, 26, 46) des linearen Arrays (21) ist.

9. Verfahren zur Schallquellenlokalisation eines Schallfelds eines Prüfmusters (22, 28) in einem Messvolumen (3, 18, 29) eines geschlossenen Schallmessprüfstands (1, 11, 31), wobei das Messvolumen (3, 18, 29) durch mehrere Begrenzungsflächen eingegrenzt ist, mit Hilfe von Mikrofonen (6, 26, 46) umfassend die Schritte: Bereitstellen des Schallmessprüfstands mit mindestens zwei der mehreren Begrenzungsflächen, wobei in dem Schallmessprüfstand die Mikrofone (6, 26, 46) voneinander beabstandet angeordnet sind; Erfassen von Schallmesssignalen eines Schallfelds mittels der Mikrofone (6, 26, 46); Auswerten der Schallmesssignale mittels einer Auswerteeinheit und Orten der Schallquellen des Schallfelds,
**dadurch gekennzeichnet, dass**
beim Bereitstellen des Schallmessprüfstands (1, 11, 31) ein Schallmessprüfstand (1, 11, 31) bereitgestellt wird, bei dem die mindestens zwei der mehreren Begrenzungsflächen eben ausgebildet und schallhart sind und entlang einer Kante (19, 49) aneinander anstoßen und die Mikrofone (6, 26, 46) entlang dieser Kante (19, 49) als lineares Array (21) angeordnet sind.

10. Verfahren nach Anspruch 9, **dadurch gekennzeichnet, dass** beim Bereitstellen des Schallmessprüfstands (1, 11, 31) ein Schallmessprüfstand (1, 11, 31) bereitgestellt wird, bei dem mindestens eine der mindestens zwei der mehreren Begrenzungsflächen eine Fläche eines in den Schallmessprüfstand eingebrachten Gegenstands ist.

11. Verfahren nach Anspruch 9 oder 10, **dadurch gekennzeichnet, dass** das Bereitstellen des Schallmessprüfstands (1, 11, 31) das Bereitstellen eines Schallmessprüfstands (1, 11, 31) umfasst, bei dem mindestens eine der mindestens zwei der mehreren Begrenzungsflächen integral mit dem Schallmessprüfstand (1, 11, 31) ausgebildet sind.

12. Verfahren nach einem der Ansprüche 9 bis 11, **dadurch gekennzeichnet, dass** beim Bereitstellen des Schallmessprüfstands (1, 11, 31) ein Schallmessprüfstand (1, 11, 31) bereitgestellt wird, bei dem den mindestens zwei der Begrenzungsflächen gegenüberliegende Begrenzungsflächen schallabsorbierend ausgebildet sind.

13. Verfahren nach einem der Ansprüche 9 bis 12, **dadurch gekennzeichnet, dass** das Bereitstellen des Schallmessprüfstands (1, 11, 31) ein Bereitstellen eines Schallmessprüfstands (1, 11,31) umfasst, bei dem weitere Mikrofone mindestens in einem weiteren linearen Mikrofonarray zum Erfassen weiterer Schallmesssignale entlang einer weiteren zu der Kante (19, 49) kollinearen Kante angeordnet sind, die von den mehreren Begrenzungsflächen gebildet ist.

14. Verfahren nach einem der Ansprüche 9 bis 13, **dadurch gekennzeichnet, dass** das Bereitstellen des Schallmessprüfstands (1, 11, 31) das Bereitstellen eines Schallmessprüfstands (1, 11, 31) umfasst, bei dem zusätzliche Mikrofone in einem zusätzlichen linearen Array zum Erfassen zusätzlicher Schallmesssignale angeordnet sind, wobei das zusätzliche lineare Array nicht kollinear zu dem linearen Array (21) ist.

15. Verfahren nach einem der Ansprüche 9 bis 14, **dadurch gekennzeichnet, dass** das Bereitstellen des Schallmessprüfstands (1, 11, 31) das Bereitstellen eines Schallmessprüfstands (1, 11, 31) umfasst, bei dem die mindestens zwei der mehreren Begrenzungsflächen Flächen eines Winkelprofils sind.

16. Verfahren nach einem der Ansprüche 9 bis 15, dass die Schallmesssignale jeweils intervallweise erfasst werden, wobei eine zeitliche Intervalllänge kleiner als eine Laufzeit eines an den den mindestens zwei der Begrenzungsflächen gegenüberliegenden Begrenzungsflächen reflektierten Schallsignals von einer der Schallquellen zu einem der Mikrofone (6, 26, 46) des linearen Arrays (21) ist.

## Claims

1. Device for locating sound sources of a sound field of a test specimen (22, 28) in a measuring volume (3, 18, 29) of an enclosed sound measurement test stand (1, 11, 31), the measuring volume (3, 18, 29) being limited by several boundary surfaces, said device comprising:
at least two of the several boundary surfaces, several microphones (6, 26, 46) arranged spaced apart from one another for detecting acoustic measuring signals of the sound field and an evaluating unit connected to the microphones (6, 26, 46) for locating sound sources of the sound field,
**characterized in that**
said at least two of the several boundary surfaces are formed planar and
reverberant and abut against each other along an edge (19, 49) and the microphones (6, 26, 46) are arranged along said edge (19, 49) as a linear array (21).

2. Device as claimed in claim 1, **characterized in that** at least one of said at least two of said several boundary surfaces is a surface of an object introduced in said sound measurement test stand (1, 11, 31).

3. Device as claimed in claim 1 or 2, **characterized in that** at least of said at least two of said several boundary surfaces are formed integrally with the sound measurement test stand (1, 11, 31).

4. Device as claimed in any of the preceding claims, **characterized in that** boundary surfaces arranged opposite to said at least two of said the several boundary surfaces are formed to be sound absorbing.

5. Device as claimed in any one of the preceding claims, **characterized in that** further microphones (6, 26, 46) for detecting further acoustic measuring signals are arranged in at least one further linear microphone array along a further edge extending collinear to said edge (19, 49), being formed by the several boundary surfaces.

6. Device as claimed in any one of the preceding claims, **characterized in that** additional microphones are arranged in an additional linear array for detecting additional acoustic measuring signals, said additional array being not collinear to the linear array (21).

7. Device as claimed in any one of the preceding claims, **characterized in that** said at least two of the several boundary surfaces are surfaces of an angle profile.

8. Device as claimed in any one of the preceding claims, **characterized in that** the acoustic measuring signals each are detected in intervals, a length of time of an interval being smaller than a transit time an acoustic signal originating from one of the sound sources and being reflected at the boundary surfaces positioned opposite to said at least two boundary surfaces needs for traveling to one of the microphones (6, 26, 46) of the linear array (21).

9. Method for locating sound sources of a sound field of a test specimen (22, 28) in a measuring volume (3, 18, 29) of an enclosed sound measurement test stand (1, 11, 31) by means of microphones (6, 26, 46), the measuring volume (3, 18, 29) being limited by several boundary surfaces, comprising the steps of: providing the sound measurement test stand with at least two of said several boundary surfaces, wherein the microphones (6, 26, 46) are arranged spaced apart from one another in said sound measurement test stand; detecting acoustic measuring signals of a sound field by means of the microphones (6, 26, 46); evaluating the acoustic measuring signals by means of an evaluating unit and locating the sound sources of the sound field,
**characterized in that**
in providing the sound measurement test stand (1, 11, 31) a sound measurement test stand (1, 11, 31) is provided in which at least two of said several boundary surfaces are formed planar and reverberant and abut against each other along an edge (19, 49) and the microphones (6, 26, 46) are arranged along said edge (19, 49) as a linear array (21).

10. Method as claimed in claim 9, **characterized in that** in providing of said sound measurement test stand (1, 11, 31) a sound measurement test stand is provided, in which at least one of said at least two of said several boundary surfaces is a surface of an object introduced into the sound measurement test stand.

11. Method as claimed in claims 9 or 10, **characterized in that** the providing of the sound measurement test stand (1, 11, 31) comprises the providing of a sound measurement test stand (1, 11, 31), in which at least one of said at least two of said several boundary surfaces are formed integrally with the sound measurement test stand (1, 11, 31).

12. Method as claimed in any of the claims 9 to 11, **characterized in that** in providing the sound measurement test stand (1, 11, 31) a sound measurement test stand (1, 11, 31) is provided, in which boundary surfaces arranged opposite to said at least two of said boundary surfaces are formed to be sound absorbing.

13. Method as claimed in any one of claims 9 to 12, **characterized in that** the providing of the sound measurement test stand (1, 11, 31) comprises the providing of a sound measurement test stand (1, 11, 31), in which further microphones for detecting further acoustic measuring signals are arranged in at least one further linear microphone array along a further edge extending collinear to said edge (19, 49), said further edge being formed by said several boundary surfaces.

14. Method as claimed in any one of claims 9 to 13, **characterized in that** the providing of the sound measurement test stand (1, 11, 31) comprises the providing of a sound measurement test stand (1, 11, 31), in which additional microphones are arranged in an additional linear array for detecting additional acoustic measuring signals, said additional linear array being not collinear to the linear array (21).

15. Method as claimed in any one of claims 9 to 13, **characterized in that** the providing of the sound measurement test stand (1, 11, 31) comprises the providing of a sound measurement test stand (1, 11, 31), in which said at least two of said several boundary surfaces are surfaces of an angle profile.

16. Method as claimed in any one of claims 9 to 15, **characterized in that** the acoustic measuring signals each are detected in intervals, a length of time of an interval being smaller than a transit time an acoustic signal originating from one of the sound sources and being reflected at the boundary surfaces positioned opposite to said at least two boundary surfaces needs for traveling to one of the microphones (6, 26, 46) of the linear array (21).

## Revendications

1. Dispositif de localisation de sources sonores d'un champ acoustique d'un modèle de contrôle (22, 28) dans un volume de mesure (3, 18, 29) d'un banc d'essai fermé de mesure de son (1, 11, 31), sachant que le volume de mesure (3, 18, 29) est délimité par plusieurs surfaces de délimitation, sachant que ledit dispositif comprend :
au moins deux surfaces de délimitation parmi les nombreuses surfaces de délimitation,
plusieurs microphones (6, 26, 46) disposés de manière espacée les uns des autres et
servant à détecter des signaux de mesure de son du champ acoustique et une unité d'évaluation couplée aux microphones (6, 26, 46) servant à localiser des sources sonores du champ acoustique,
**caractérisé en ce que**
les deux surfaces de délimitation ou plus parmi les nombreuses surfaces de délimitation sont réalisées de manière plane et sont réverbérantes et sont juxtaposées les unes aux autres le long d'une arête (19, 49), et **en ce que** les microphones (6, 26, 46) sont disposés de manière à se présenter sous la forme d'un réseau linéaire (21) le long de ladite arête (19, 49).

2. Dispositif selon la revendication 1, **caractérisé en ce qu'**au moins des deux surfaces de délimitation ou plus parmi les nombreuses surfaces de délimitation constitue une surface d'un objet introduit dans le banc d'essai de mesure de son.

3. Dispositif selon la revendication 1 ou 2, **caractérisé en ce qu'**au moins une des deux surfaces de délimitation ou plus parmi les nombreuses surfaces de délimitation est réalisée de manière intégrale avec le banc d'essai de mesure de son (1, 11,31).

4. Dispositif selon l'une quelconque des revendications précédentes, **caractérisé en ce que** des surfaces de délimitation faisant face aux deux surfaces de délimitation ou plus parmi les nombreuses surfaces de délimitation sont réalisées de manière à absorber le son.

5. Dispositif selon l'une quelconque des revendications précédentes, **caractérisé en ce que** d'autres microphones (6, 26, 46) sont disposés au moins dans un autre réseau de microphones linéaire servant à détecter d'autres signaux de mesure de son, le long d'une autre arête colinéaire par rapport à l'arête (19, 49), laquelle est formée par les nombreuses surfaces de délimitation.

6. Dispositif selon l'une quelconque des revendications précédentes, **caractérisé en ce que** des microphones supplémentaires sont disposés dans un réseau linéaire supplémentaire servant à détecter des signaux de mesure de son supplémentaires, sachant que le réseau linéaire supplémentaire n'est pas colinéaire par rapport au réseau linéaire (21).

7. Dispositif selon l'une quelconque des revendications précédentes, **caractérisé en ce que** les deux surfaces de délimitation ou plus parmi les nombreuses surfaces de délimitation sont des surfaces d'un profilé d'angle.

8. Dispositif selon l'une quelconque des revendications précédentes, **caractérisé en ce que** les signaux de mesure de son sont détectés respectivement par intervalle, sachant qu'une longueur d'écart dans le temps est plus petite qu'une durée de parcours d'un signal sonore réfléchi au niveau des surfaces de délimitation faisant face aux deux surfaces de délimitation ou plus, en provenance d'une des sources sonores en direction d'un des microphones (6, 26, 46) du réseau linéaire (21).

9. Procédé de localisation à l'aide de microphones (6, 26, 46) de sources sonores d'un champ acoustique d'un modèle de contrôle (22, 28) dans un volume de mesure (3, 18, 29) d'un banc d'essai de mesure de son (1, 11, 31) fermé, sachant que le volume de mesure (3, 18, 29) est délimité par plusieurs surfaces de délimitation, ledit procédé comprenant les étapes suivantes consistant à :
fournir le banc d'essai de mesure de son avec au moins deux surfaces de délimitation parmi les nombreuses surfaces de délimitation, sachant que dans le banc d'essai de mesure de son, les microphones (6, 26, 46) sont disposés de manière espacée les uns par rapport aux autres ;
détecter des signaux de mesure de son d'un champ acoustique au moyen des microphones (6, 26, 46) ;
évaluer les signaux de mesure de son au moyen d'une unité d'évaluation et localiser les sources sonores du champ acoustique,
**caractérisé en ce**
**qu'**un banc d'essai de mesure de son (1, 11, 31) est fourni lors de la mise à disposition du banc d'essai de mesure de son (1, 11, 31), dans le cadre duquel les deux surfaces de délimitation ou plus parmi les nombreuses surfaces de délimitation sont réalisées de manière plane et sont réverbérantes et sont juxtaposées les unes contre les autres le long d'une arête (19, 49), et en ce que les microphones (6, 26, 46) sont disposés sous la forme d'un réseau linéaire (21) le long de ladite arête (19, 49).

10. Procédé selon la revendication 9, **caractérisé en ce qu'**un banc de mesure de mesure de son (1, 11, 31) est fourni lors de la mise à disposition du banc de mesure de son (1, 11, 31), dans le cadre duquel au moins une des deux surfaces de délimitation ou plus parmi les nombreuses surfaces de délimitation constitue une surface d'un objet placé dans le banc d'essai de mesure de son.

11. Procédé selon la revendication 9 ou 10, **caractérisé en ce que** la mise à disposition du banc d'essai de mesure de son (1, 11, 31) comprend la mise à disposition d'un banc d'essai de mesure de son (1, 11, 31), dans le cadre duquel au moins une des deux surfaces de délimitation ou plus parmi les nombreuses surfaces de délimitation est réalisée de manière intégrale avec le banc d'essai de mesure de son (1, 11, 31).

12. Procédé selon l'une quelconque des revendications 9 à 11, **caractérisé en ce qu'**un banc d'essai de mesure de son (1, 11, 31) est fourni lors de la mise à disposition du banc d'essai de mesure de son (1, 11, 31), dans le cadre duquel des surfaces de délimitation faisant face aux deux surfaces de délimitation ou plus sont réalisées de manière à absorber le son.

13. Procédé selon l'une quelconque des revendications 9 à 12, **caractérisé en ce que** la mise à disposition du banc d'essai de mesure de son (1, 11, 31) comprend une mise à disposition d'un banc d'essai de mesure de son (1, 11, 31), dans le cadre duquel d'autres microphones sont disposés au moins dans un autre réseau de microphones linéaire servant à détecter d'autres signaux de mesure de son le long d'une autre arête colinéaire par rapport à l'arête (19, 49), laquelle est formée par les nombreuses surfaces de délimitation.

14. Procédé selon l'une quelconque des revendications 9 à 13, **caractérisé en ce que** la mise à disposition du banc d'essai de mesure de son (1, 11, 31) comprend la mise à disposition d'un banc d'essai de mesure de son (1, 11, 31), dans le cadre duquel des microphones supplémentaires sont disposés dans un réseau linéaire supplémentaire servant à détecter des signaux supplémentaires de mesure de son, sachant que le réseau supplémentaire linéaire n'est pas colinéaire par rapport au réseau linéaire (21).

15. Procédé selon l'une quelconque des revendications 9 à 14, **caractérisé en ce que** la mise à disposition du banc d'essai de mesure de son (1, 11, 31) comprend la mise à disposition d'un banc d'essai de mesure de son (1, 11, 31), dans le cadre duquel les deux surfaces de délimitation ou plus parmi les nombreuses surfaces de délimitation constituent des surfaces d'un profilé d'angle.

16. Procédé selon l'une quelconque des revendications 9 à 15, **caractérisé en ce que** les signaux de mesure de son sont détectés respectivement par intervalle, sachant qu'une longueur d'écart dans le temps est plus petite qu'une durée de parcours d'un signal sonore réfléchi au niveau des surfaces de délimitation faisant face aux deux surfaces de délimitation ou plus, en provenance d'une des sources sonores en direction d'un des microphones (6, 26, 46) du réseau linéaire (21).
